# EUROPEAN PATENT APPLICATION

(11) **EP 2 229 025 A1**
(43) Date of publication of application: **15.09.2010**
(21) Application number: 09155041.8
(22) Date of filing: 12.03.2009
(51) Int. Cl.: H04W 36/14

(54) **Method for improving the power saving of user equipment**

(71) Applicant: NEC Corporation, Minato-ku Tokyo 108-8001 (JP)
(72) Inventor: Sautet, Gérald, 78270 Bonnières sur Seine (FR); Marchand, Pierre, 75008 Paris (FR)
(74) Representative: Ilgart, Jean-Christophe

(57) **Abstract**

The invention concerns a method for improving the power saving and resource utilization of a UE without VoIP communications ability said USE being attached to a first network and roaming in an area covered by at least a second network

The method according to the invention, comprises the following steps:
- The USE transmits to the first network information indicating its inability to support VoIP communication,
- the first network transmits to the USE a measurement command comprising a list of neighboring cells of said second network supporting VoIP communications only or not supporting voice service at all;
- the UE performs measurements only on the neighboring cells excluding cells supporting VoIP communications only or not supporting voice service at all, and reports the measurements to the first network.
- the first network makes handover decisions only towards one of the neighboring cells excluding cells supporting VoIP communications only or not supporting voice service at all.

## Description

### TECHNICAL DOMAIN

The invention pertains to telecommunication field and concerns for improving the power saving and resource utilization of a UE (User Equipment) not supporting VoIP communication capability, said UE being attached to a first network and roaming in an area comprising at least a second network supporting only VoIP communication.

The invention concerns also a User Equipment adapted for implementing said method.

### STATE OF PRIOR ART

According to the current 3GPP specifications, all the UE's have to perform measurements in order to prepare handovers and cell reselections, whatever their VoIP capability, and to report these measurements to the network.

However, some UE's, whatever the supported RAT, do not support the VoIP (voice over IP). These UE's cannot do a voice communication on a LTE cell for example, in which, depending on the release, it may happen that voice service is not supported at all, or that the only proposed voice communications are VoIP communications. In any of these both cases, UE's that support voice service only on Circuit Switched networks cannot be handover to that type of cells.

The UE capabilities are a list of the functionalities that the UE supports. They are defined, for a LTE mobile phone for example, in the 3GPP TS 36.306.

These capabilities are sent by the UE to the network during the attach procedure.

The current UE capabilities list does not contain any explicit indication on whether the UE supports VoIP communications or not, but contain some kind of implicit indication through the support of RoCH (header compression) profiles. So it is assumed that by either this already existing implicit indication, or by the introduction of a new more explicit indication, the networks somehow knows that the UE does not support VoIP. So when such UE's do a voice communication on a 2G or a 3G cell, the networks knows it is useless to do a handover towards a cell where only VoIP communications is supported (or no voice at all is supported) .

One object of the invention is to avoid useless measurements (which are normally needed to prepare a handover) by a UE. This will optimize the power consumption of the UE, the signaling load due to measurements requests and measurement reports, and the radio resource utilization.

### PRESENTATION OF THE INVENTION

The object of the invention is achieved by a method for improving the power saving of a UE not supporting VoIP communications, said UE being attached to a first network and roaming in an area comprising neighboring cells of at least a second network supporting only VoIP communications, or not supporting voice services at all.

According to the invention, said method comprising the following steps:
- The UE transmits to the first network information indicating its inability to support VoIP communication,
- the first network transmits to the UE a measurement command comprising a list of neighboring cells of said second network supporting VoIP communications only or not supporting voice service at all;
- the UE performs measurements only on the neighboring cells excluding cells supporting VoIP communications only or not supporting voice service at all, and reports the measurements to the first network.
- the first network makes handover decisions only towards one of the neighboring cells excluding cells supporting VoIP communications only or not supporting voice service at all.

In addition to improving the power saving of a UE, the method according to the invention also improves the signalling between the network and the UE, and the resource utilization.

In a first variant of the invention, the information transmitted by the UE to the first network comprises Robust Header Compression (RoHC) profiles supported by said UE.

In a second variant of the invention, the information transmitted by the UE to the first network is a Boolean information.

The method according to the invention is implemented when said first network is a 2G or a 3G network and said second network is a Beyond 3G network supporting voice services only through VoIP or not supporting voice at all.

The method according to the invention is implemented by means of User Equipment (UE) comprising:
- means for indicating to the first network its inability to support VoIP communication,
- means for retrieving a list of neighboring cells transmitted by the first network with a measurement command,
- means for performing measurements only on the neighboring cells provided with said measurement command.

### BRIEF DESCRIPTION OF THE FIGURES

The forgoing summary, as well as the following detailed description, will be better understood when read in conjunction with the appended figure representing a flow chart schematically illustrating the method according to the invention

### DESCRIPTION OF A DETAILED ENBODIMENT OF THE INVENTION

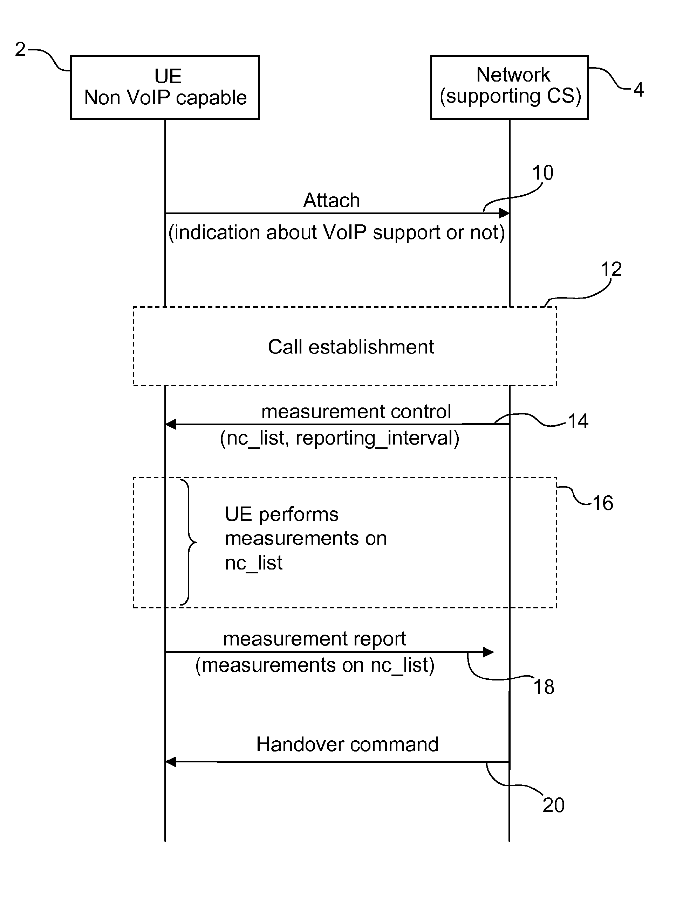

The invention well be described by reference to figure 1 illustrating the message exchanged between a User Equipment 2 camping in a cell of a 2G or a 3G network 4.

At step 10, the UE 2, in 2G active TCH state or in 3G active Cell_DCH state, transmits during the attach procedure to the network 4 an information indicating that the UE 2 does not support the VoIP.

At step 12, a voice call is established by the UE 2.

At step 14, the network 4 transmits to the UE 2 a list nc-list of cells belonging to RAT's supporting CS (Circuit Switched) calls only.

At step 16, the UE 2 performs measurements on nc-list and transmits measurement report to the network 4 at step 18. The network will take said measurement into account in its handover decision towards a neighboring cell.

At step 20, the network 4 transmits a handover command to the UE 2 to one of the cells of the nc-list.

## Claims

1. Method for improving the power saving and resource utilization of a UE without VoIP communications ability said UE being attached to a first network and roaming in an area covered by at least a second network, said method **characterized by** the following steps:
- the UE transmits to the first network information indicating its inability to support VoIP communication,
- the first network transmits to the UE a measurement command comprising a list of neighboring cells of said second network supporting VoIP communications only or not supporting voice service at all;
- the UE performs measurements only on the neighboring cells excluding cells supporting VoIP communications only or not supporting voice service at all, and reports the measurements to the first network.
- the first network makes handover decisions only towards one of the neighboring cells excluding cells supporting VoIP communications only or not supporting voice service at all.

2. Method according to claim 1 wherein the information transmitted by the UE to the first network comprises Robust Header Compression (RoHC) profiles supported by said UE.

3. Method according to claim 1 wherein the information transmitted by the UE to the first network is Boolean information.

4. Method according to claim 1 wherein, said first network is a 2G or a 3G network and said second network is an LTE network.

5. User Equipment (UE) without VoIP communications ability attached to a first network and roaming in an area comprising at least one second network, **characterized by**:
- means for indicating to the first network its inability to support VoIP communication,
- means for retrieving a list of neighboring cells transmitted by the first network with a measurement command,
- means for performing measurements only on the neighboring cells provided with said measurement command.
